(19) **Europäisches Patentamt / European Patent Office / Office européen des brevets**

(11) **EP 1 834 814 B1**

(12) **EUROPEAN PATENT SPECIFICATION**

(45) Date of publication and mention
of the grant of the patent:
**08.09.2010 Bulletin 2010/36**

(51) Int Cl.:
**B60C 15/06** (2006.01)     **B60C 15/00** (2006.01)

(21) Application number: **05822717.4**

(22) Date of filing: **28.12.2005**

(86) International application number:
**PCT/JP2005/024069**

(87) International publication number:
**WO 2006/073109 (13.07.2006 Gazette 2006/28)**

(54) **PNEUMATIC TIRE**

LUFTREIFEN

PNEUMATIQUE

(84) Designated Contracting States:
**DE FR**

(30) Priority: **07.01.2005 JP 2005002642**

(43) Date of publication of application:
**19.09.2007 Bulletin 2007/38**

(73) Proprietor: **THE YOKOHAMA RUBBER CO., LTD.**
**Tokyo 105-8685 (JP)**

(72) Inventor: **WAKATSUKI, Masashi**
**The Yokohama Rubber Co., Ltd.**
**Hiratsuka-shi, Kanagawa 2548601 (JP)**

(74) Representative: **HOFFMANN EITLE**
**Patent- und Rechtsanwälte**
**Arabellastrasse 4**
**81925 München (DE)**

(56) References cited:
**JP-A- 03 169 725     JP-A- 05 024 410**
**JP-A- 05 262 104     JP-A- 06 024 206**
**JP-A- 10 264 620     JP-A- 2002 178 724**

EP 1 834 814 B1

**Description**

TECHNICAL FIELD

The present invention relates to a pneumatic tire suitable for a light truck and provided with a carcass ply formed of organic fiber cords. More specifically, the present invention relates to a pneumatic tire capable of enhancing durability and reducing rolling resistance while maintaining lateral stiffness.

BACKGROUND ART

As a pneumatic radial tire for a light truck, there is one including a carcass ply formed of organic fiber cords (for example, refer to Patent Document 1). While a pneumatic radial tire of this kind is used with a high air pressure and under a heavy loaded condition, the tire is required to be further improved in durability thereof since a separation failure in a belt edge portion thereof tends to occur in the last stage of abrasion. Additionally, in the pneumatic radial tire of this kind, it is required that rolling resistance be reduced while maintaining lateral stiffness thereof which influences driving stability.

Patent Document 1: Japanese unexamined patent application publication No. Hei6-24206

In JP 2002 178724 A there is disclosed a tire construction aimed at reducing rolling resistance. The tire has a carcass ply comprising a return section, which turns around a bead core and returns, provided in a body section, which is laid across the bead core of a bead section, integrally. The bead section includes a bead apex rubber, which extends between the body section and the return section in a tapered form outward in a radial direction from the bead core, a packing rubber whose inner end in a radial direction is connected to the outside face of the bead apex rubber and whose outer end extends outward in a radial direction in a tapered form along the body section, and an outer side wall rubber, which is arranged outside the packing rubber in the axial direction and forms the outer surface of the tire, and limits the loss tangent and the complex modulus of elasticity in a fixed range.

In JP 10 264 620 A there is disclosed a construction of pneumatic tire of less than 75% flatness rate in order to improve durability of the belt portion and wheel rut wandering resistance without deteriorating driving stability.

DISCLOSURE OF THE INVENTION

An object of this invention is to provide a pneumatic tire capable of enhancing durability and reducing rolling resistance while maintaining lateral stiffness.

According to the present invention there is provided a pneumatic tire, in which at least one carcass ply laid therein so as to extend between a pair of bead portions is formed of organic fiber cords; which has a casing structure where a bead filler is arranged on an outer peripheral side of a bead core buried in each of the bead portions; and whose air pressure corresponding to the maximum load capacity thereof is in a range from 350 to 650 kPa, wherein the bead filler includes a plurality of rubber layers stacked in a radial direction of the tire, the rubber layer on the outermost peripheral side has a cross-sectional area $S_1$, a hardness $Hs_1$, and a loss tangent $\tan\delta_1$, the rubber layer on the innermost peripheral side has a cross-sectional area $S_2$, a hardness $Hs_2$, and a loss tangent $\tan\delta_2$, and the height of the bead filler is BFH and the cross-sectional height of the tire is SH and the following relations are expressed

(1)

$$(S1 \times \tan\delta_1) / [(S_1 \times \tan\delta_1) + (S_2 \times \tan\delta_2)]$$

(2)

$$(S_1 \times Hs_1) / [(S_1 \times Hs_1) + (S_2 \times Hs_2)]$$

(3)

BFH/SH

(4)

$$Hs_2 - Hs_1$$

and

(5) the value of $\tan\delta_1$ and difference $\tan\delta_2 - \tan\delta_1$; **characterized in that** rubber characteristics of the rubber layers are such that the value of relation is 0.25 to 0.40, the value of relation is 0.35 to 0.50, the value of relation is 0.25 to 0.60, the value of relation is 10 to 25 and for relation $\tan\delta_1 \le 0.1$ and $\tan\delta_2 - \tan\delta_1 \le 0.1$.

As a result of having devotedly conducted a research on a pneumatic tire which is provided with a carcass ply formed of organic fiber cords and is used with a high internal pressure, the inventor of the present invention gained knowledge that: the pneumatic tire of this kind causes creep deformation in the carcass ply as a result of running and increases distortion in a belt edge portion, resulting in more likeliness of a separation failure in the belt edge portion in the last stage of abrasion. This knowledge has led the inventor to the present invention.

More specifically, in the present invention, by softening an apex portion of the bead filler based on configurations realized by (2) and (4), the lateral stiffness is maintained while distortion in the belt edge portion being reduced. At the same time, by ensuring the height of the bead filler based on a configuration realized by (3), the creep deformation in the carcass ply is suppressed. With these configurations, it becomes possible to enhance durability of the pneumatic tire which is provided with the carcass ply formed of organic fiber cords and is used with a high internal pressure. Additionally, by reducing heat generation of the apex portion of the bead filler based on configurations realized by (1) and (5), it becomes also possible to reduce rolling resistance thereof.

In the present invention, the bead filler includes a plurality of rubber layers stacked in a radial direction of the tire. In this case, as the above rubber layers, in addition to the outermost and innermost peripheral rubber layers, at least one intermediate rubber layer may be interposed therebetween. For example, the bead filler can be formed of three different rubber layers. However, since excessive presence of the intermediate rubber layer reduces significance of defining physical properties of the outermost and innermost peripheral rubber layers, it is better that a proportion of a cross-sectional area of the intermediate rubber layer with respect to a cross-sectional area of the whole bead filler be 20% or less. As the most preferable configuration, the bead filler includes two different rubber layers stacked in a radial direction of the tire.

Additionally, it is preferred that: the number of the carcass plies be any one of one-layered structure and two-layered structure; all carcass plies be formed as a ply-lock structure where all of the carcass plies are turned up around the bead core from the inside of the tire to the outside; and the highest turned-up edge of the carcass plies be arranged more inwardly in the tire radial direction than the apex of the bead filler. The ply-lock structure here is intended to optimize stiffness of the bead portions and the sidewall portions of the pneumatic tire of the present invention. In particular, it is better that, in the tire radial direction, a distance between the highest turned-up edge of the carcass plies and the apex of the bead filler be at least 15 mm.

In the present invention, the cross-sectional areas $S_1$ and $S_2$ of the rubber layers are cross-sectional areas ($mm^2$) measured in a tire cross section taken along a meridian thereof. Additionally, the hardnesses $Hs_1$ and $Hs_2$ are JIS-A hardnesses measured at a temperature of 25 °C, for example, by attaching a JIS-A hardness meter perpendicularly to a cut sample of the bead filler. Furthermore, loss tangents $\tan\delta_1$ and $\tan\delta_2$ are each measured by having a rubber specimen of 40 mm $\times$ 5 mm $\times$ 2 mm mounted onto a dynamic viscoelasticity measuring device in order that the specimen can be distorted in a longitudinal direction, and then by providing an initial distortion of 10 % under a temperature of 60 °C with conditions being an amplitude of $\pm 2$ %, and a frequency of 20 Hz.

Note that an air pressure corresponding to the maximum load capacity is one defined by a certain standard, that is, for example, an air pressure specified in the correspondence table of air pressures and load capacities in the JATMA YEAR BOOK (the year 2004 edition).

BRIEF DESCRIPTION OF DRAWINGS

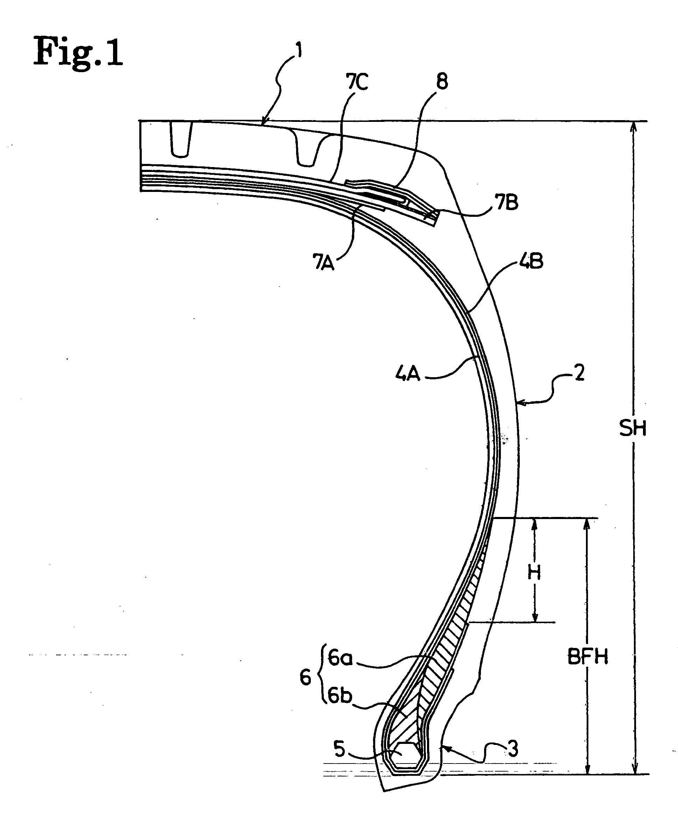

Fig. 1 is a half cross-sectional view showing a small truck pneumatic radial tire configured of an embodiment of the present invention, the view being taken along a meridian of the tire.

BEST MODE FOR CARRYING OUT THE INVENTION

Hereinbelow, a configuration of the present invention will be described in detail with reference to the accompanying drawing.

Fig. 1 shows a light truck pneumatic radial tire configured of an embodiment of the present invention. In Fig. 1, reference numerals 1, 2 and 3 denote a tread portion, a sidewall portion, and a bead portion, respectively. Two carcass plies 4A and 4B are laid therein so as to extend between a pair of the bead portions 3, 3. The respective carcass plies 4A and 4B are formed of pluralities of organic fiber cords, each of which is oriented in a radial direction of the tire. As the organic fiber cords, nylon cords, polyester cords and the like can be used. The carcass plies 4A and 4B are turned up from the inside of the tire to the outside in a manner that the carcass plies wrap up a bead core 5 and a bead filler 6 which are buried in the bead portion 3.

On the other hand, in an outer periphery of the carcass plies 4A and 4B in the tread portion 1, three belt layers 7A, 7B and 7C are buried along an entire-circumference of the tire. Each of these belt layers 7A to 7C includes a plurality of reinforcement cords inclined with respect to a circumferential direction of the tire. The belt layers 7A to 7C are arranged in a manner that the reinforcement cords are crossed over each other in the layers. Additionally, in the vicinity of an edge portion of the belt layers 7A to 7C, a belt cover layer 8, which is formed by winding up organic fiber cords at an angle tilted substantially by 0 degrees with respect to the tire circumferential direction, is provided.

In the abovementioned pneumatic radial tire, the respective carcass plies 4A and 4B are formed of organic fiber cords, and the three belt layers 7A to 7C are arranged on an outer periphery of the carcass plies 4A and 4B. At the same time, the tire has a casing structure where the bead filler 6 is arranged on the outer periphery of the bead core 5. Moreover, a pneumatic pressure corresponding to the maximum load capacity of the tire is specified to be in a range from 350 to 650 kPa.

In the abovementioned pneumatic radial tire, the bead filler 6 is formed of two different rubber layers 6a and 6b stacked in the tire radial direction. Those rubber layers 6a and 6b are laminated in the tire radial direction, and however, cross-sectional shapes thereof are not particularly limited. Here, a cross-sectional area $S_1$, a hardness $Hs_1$, a loss tangent $\tan\delta_1$ of the rubber layer 6a on the outermost peripheral side a cross-sectional area $S_2$, a hardness $Hs_2$, a loss tangent $\tan\delta_2$ of the rubber layer 6b on the innermost peripheral side; and a ratio of a height BFH of the bead filler to a cross-sectional height SH of the tire are set to have the following relations (1) to (5). Note that both the tire cross-sectional height SH and bead filler height BFH are heights from a bead heel of the tire in the tire radial direction:

(1)

$$(S_1 \times \tan\delta_1)/[(S_1 \times \tan\delta_1)+(S_2 \times \tan\delta_2)] = 0.25 \text{ to } 0.40$$

(2)

$$(S_1 \times Hs_1)/[(S_1 \times Hs_1) + (S_2 \times Hs_2)] = 0.35 \text{ to } 0.50$$

(3)

$$BFH/SH = 0.25 \text{ to } 0.60$$

(4)

$$Hs_2 - Hs_1 = 10 \text{ to } 25$$

(5)

$$\tan\delta_1 \leq 0.1 \text{ and } \tan\delta_2 - \tan\delta_1 \leq 0.1.$$

By softening an apex portion of the bead filler 6 based on configurations realized by (2) and (4) as described above, the lateral stiffness is maintained while distortion in the belt edge portion being reduced. At the same time, by ensuring the height of the bead filler 6 based on a configuration realized by (3), the creep deformation in the carcass plies is suppressed. With these configurations, it is possible to enhance durability of the light truck pneumatic radial tire which is provided with the carcass plies 4A and 4B formed of organic fiber cords and is used with a high internal pressure. Additionally, by reducing an amount of heat generation of the apex portion of the bead filler 6 based on configurations realized by (1) and (5), it is also possible to reduce the rolling resistance thereof.

Regarding the configuration realized by (1) with conditions (2) to (5) satisfied, if a value of $(S_1 \times \tan\delta_1)/[(S_1 \times \tan\delta_1)+(S_2 \times \tan\delta_2)]$ becomes smaller than 0.25, the rolling resistance is increased, and if the value exceeds 0.40 to the contrary, the lateral stiffness cannot be maintained. A more preferable range of $(S_1 \times \tan\delta_1)/[(S_1 \times \tan\delta_1)+(S_2 \times \tan\delta_2)]$ is from 0.30 to 0.35.

Regarding the configuration realized by (2) with conditions (1) and (3) to (5) satisfied, if a value of $(S_1 \times Hs_1)/[(S_1 \times Hs_1)+(S_2 \times Hs_2)]$ becomes smaller than 0.35, the lateral stiffness cannot be maintained, and if the value exceeds 0.50 to the contrary, a reduction effect on distortion in the belt edge portion will be insufficient. A more preferable range of $(S_1 \times Hs_1)/[(S_1 \times Hs_1)+(S_2 \times Hs_2)]$ is from 0.40 to 0.45.

Regarding the configuration realized by (3), if a value of BFH/SH is smaller than 0.25, the lateral stiffness is reduced while an effect of suppressing the creep deformation in the carcass plies being insufficient, and if the value exceeds 0.60 to the contrary, the reduction effect on distortion in the belt edge portion becomes insufficient. A preferable range of BFH/SH is from 0.35 to 0.45.

Regarding the configuration realized by (4), if a value of $Hs_2-Hs_1$ is smaller than 10, an effect of reducing distortion in the belt edge portion while maintaining the lateral stiffness will be insufficient. Contrary to this, if the value exceeds 25, a stiffness difference between the rubber layers constituting the bead filler becomes excessive, resulting in insufficiency of durability of the tire in a rim cushion portion.

Regarding the configuration realized by (5), if a value of $\tan\delta_1$ exceeds 0.1, the rolling resistance is increased. On the other hand, if a value of $\tan\delta_2-\tan\delta_1$ exceeds 0.1, a difference of a heat generation between the rubber layers forming the bead filler becomes excessive, resulting in insufficiency of durability of the tire in the rim cushion portion.

In the abovementioned pneumatic radial tire, the two carcass plies 4A and 4B are turned up around the bead core 5 from the inside of the tire to the outside, and the highest turned-up edge of the carcass plies 4A and 4B is arranged more inwardly in the tire radial direction than the apex of the bead filler 6. A ply-lock structure as described here prevents stiffness of a vicinity of the apex of the bead filler 6 from being excessively increased, whereby it becomes possible to obtain a reduction effect on distortion in the belt edge portion. In particular, it is better that a distance H between the highest turned-up edge of the carcass plies 4A and 4B and the apex of the bead filler 6 be at least 15 mm in the tire radial direction.

Although the pneumatic tire provided with the two carcass plies formed of organic fiber cords has been described in the above embodiment, the present invention can be applied to a pneumatic tire provided with only one carcass ply formed of organic fiber cords. In this case as well, it is preferred that the one carcass ply be turned up around a bead core from the inside of the tire to the outside, and that a turned-up edge of the carcass ply be arranged more inwardly in the tire radial direction than an apex of a bead filler.

The preferred embodiment of the present invention has been described hereinabove. However, it should be understood that various modifications to, substitutions for, and replacements with the preferred embodiment can be carried out as long as the modifications, the substitutions, and the replacements do not depart from the spirit and the scope of the present invention defined by the attached claims.

EXAMPLES

Tires of Examples 1 and 2 and Comparative Examples 1 to 6 were prepared as follows. In pneumatic radial tires for a light truck each of which a tire size is 195/75R15 and an air pressure corresponding to the maximum load capacity thereof is 600 kPa, a bead filler of each of the tires includes two different rubber layers stacked in a radial direction of the tire. In each of the pneumatic tires, a cross-sectional area $S_1$, a hardness $Hs_1$, a loss tangent $\tan\delta_1$ of the rubber layer on the outermost side, and a cross-sectional area $S_2$, a hardness $Hs_2$, a loss tangent $\tan\delta_2$ of the rubber layer on the innermost peripheral side, and a ratio of a height BFH of the bead filler to a cross-sectional height SH of the tire were set variously different from those in the other ones of the pneumatic tires. Additionally, for the purpose of comparison, a pneumatic radial tire for a light truck (Prior Art) was prepared, the pneumatic radial tire being provided with a bead filler constituted of one rubber layer.

For theses test tires, rolling resistance, driving stability and durability were assessed by the following test methods, respectively, and results of the assessment are shown in Table 1 as follows.

Rolling resistance:

Each of the test tires was assembled onto an wheel of a rim size of 15 × 5·1/2 J, and by using an indoor drum-testing machine, rolling resistance thereof was measured when each of the test tire was allowed to run under conditions that an air pressure is 600 kPa, a load is 10.1 kN, and a speed is 80 km/h. Results of the assessment are shown in index numbers obtained by taking a rolling resistance value of Prior Art as 100. The lower value of the index number is, the smaller rolling resistance is.

Driving stability:

Each of the test tires was assembled onto an wheel of a rim size of 15 × 5 · 1/2 J, installed to a light truck having a gross vehicle weight of 5 tons, and inflated at an air pressure of 600 kPa. Then, a feeling test by test drivers was performed on the tire. Results of the assessment are shown in index numbers obtained by taking a value of Prior Art as 100. The higher value of the index number is, the better driving stability (an indicator of the optimum level of lateral stiffness) is.

Durability:

By using a drum-testing machine having a drum diameter of 1707 mm, a durability test specified by JIS D-4230 was performed on each of the test tires, and was followed by measurement of a mileage traveled until a failure occurs in any one of a belt edge portion and a rim cushion portion thereof. The measurement was conducted under the condition that, every 6 hours, a load on the tire was increased by 8% of the standard maximum load thereof and a speed was increased by 5%. Results of the assessment are shown in index numbers obtained by taking a value of Prior Art as 100. The higher value of the index number is, the better durability is.

As is evident from Table 1, in comparison with the tire of Prior Art, the tires of Examples 1 and 2 were able to be lower in rolling resistance with the driving stability being maintained, and at the same time, were excellent in the durability. On the other hand, because the tires of Comparative Examples 1 to 6 were out of the scope defined by the present invention, none of them was able to simultaneously satisfy the durability, driving stability and rolling resistance. In particular, while the tires of Comparative Examples 1 to 4 each had a failure in the belt edge portion in the durability test, the tires of Comparative Examples 5 and 6 each had a failure in the rim cushion portion because they each had an excessive difference in physical properties between the two rubber layers constituting the bead filler.

Table 1

| | Hardness $Hs_1$ | Hardness $Hs_2$ | Cross-sectional area $S_1$ (mm$^2$) | Cross-sectional area $S_2$ (mm$^2$) | Loss tangent $\tan\delta_1$ | Loss tangent $\tan\delta_2$ | $(S_1\times\tan\delta_1)/[(S_1\times\tan\delta_1)+(S_2\times\tan\delta_2)]$ | $(S_1\times Hs_1)/[(S_1\times Hs_1)+(S_2\times Hs_2)]$ | BFH /SH | $Hs_2-Hs_1$ | $\tan\delta_2-\tan\delta_1$ | Rolling resistance | Driving stability | Durability |
|---|---|---|---|---|---|---|---|---|---|---|---|---|---|---|
| Prior Art | - | (80) | - | (2) | - | (0.13) | - | - | 0.50 | - | - | 100 | 100 | 100 |
| Example 1 | 58 | 80 | 1 | 1.27 | 0.06 | 0.13 | 0.27 | 0.36 | 0.60 | 22 | 0.07 | 97 | 100 | 115 |
| Example 2 | 58 | 80 | 1.38 | 1 | 0.06 | 0.13 | 0.39 | 0.50 | 0.50 | 22 | 0.07 | 96 | 100 | 120 |
| Comparative Example 1 | 58 | 80 | 1 | 1.6 | 0.06 | 0.13 | 0.22 | 0.31 | 0.50 | 22 | 0.07 | 101 | 95 | 99 |
| Comparative Example 2 | 58 | 80 | 1.6 | 1 | 0.06 | 0.13 | 0.42 | 0.54 | 0.50 | 22 | 0.07 | 98 | 95 | 110 |
| Comparative Example 3 | 58 | 80 | 1.8 | 1 | 0.06 | 0.13 | 0.45 | 0.57 | 0.50 | 22 | 0.07 | 99 | 96 | 108 |
| Comparative Example 4 | 58 | 80 | 1 | 1.27 | 0.06 | 0.13 | 0.27 | 0.36 | 0.65 | 22 | 0.07 | 97 | 100 | 98 |
| Comparative Example 5 | 50 | 80 | 1 | 1.27 | 0.06 | 0.13 | 0.27 | 0.33 | 0.50 | 30 | 0.07 | 97 | 95 | 98 |
| Comparative Example 6 | 58 | 80 | 1 | 1.27 | 0.04 | 0.15 | 0.17 | 0.36 | 0.50 | 22 | 0.11 | 97 | 100 | 98 |

**Claims**

1. A pneumatic tire, in which at least one carcass ply (4A, 4B) laid therein so as to extend between a pair of bead portions (3) is formed of organic fiber cords; which has a casing structure where a bead filler (6) is arranged on an outer peripheral side of a bead core (5) buried in each of the bead portions (3); and whose air pressure corresponding to the maximum load capacity thereof is in a range from 350 to 650 kPa,
   wherein the bead filler (6) includes a plurality of rubber layers (6a, 6b) stacked in a radial direction of the tire, the rubber layer (6a) on the outermost peripheral side has a cross-sectional area $S_1$, a hardness $Hs_1$, and a loss tangent $\tan\delta_1$, the rubber layer (6b) on the innermost peripheral side has a cross-sectional area $S_2$, a hardness $Hs_2$, and a loss tangent $\tan\delta_2$, and the height of the bead filler (6) is BFH and the cross-sectional height of the tire is SH and the following relations are expressed

   (1)

$$(S_1 \times \tan\delta_1) / [(S_1 \times \tan\delta_1) + (S_2 \times \tan\delta_2)]$$

   (2)

$$(S_1 \times Hs_1) / [(S_1 \times Hs_1) + (S_2 \times Hs_2)]$$

   (3)

$$BFH/SH$$

   (4)

$$Hs_2 - Hs_1$$

   and
   (5) the value of $\tan\delta_1$ and difference $\tan\delta_2 - \tan\delta_1$

   **characterized in that** rubber characteristics of the rubber layers (6a, 6b) are such that the value of relation (1) is 0.25 to 0.40, the value of relation (2) is 0.35 to 0.50, the value of relation (3) is 0.25 to 0.60, the value of relation (4) is 10 to 25 and for relation (5) $\tan\delta_1 \leq 0.1$ and $\tan\delta_2 - \tan\delta_1 \leq 0.1$.

2. The pneumatic tire according to claim 1, wherein:

   the number of the carcass plies (4A, 4B) is any one of one-layered structure and two-layered structure;
   all of the carcass plies (4A, 4B) are turned up around the bead core (5) from the inside of the tire to the outside; and
   the highest turned-up edge (4B) of the carcass plies is arranged more inwardly than an apex of the bead filler (6) in a radial direction of the tire.

3. The pneumatic tire according to claim 2, wherein a distance (H) between the highest turned-up edge (4B) of the carcass plies (4A, 4B) and the apex of the bead filler (6) in the radial direction of the tire is set to be at least 15 mm.

**EP 1 834 814 B1**

**Patentansprüche**

1. Pneumatischer Reifen, in dem wenigstens eine Karkassenlage (4A, 4B), die darin eingelegt ist, um sich zwischen einem Paar von Wulstrandabschnitten (3) zu erstrecken, aus organischen Faserkorden ausgebildet ist; der eine Gehäusestruktur aufweist, bei der ein Wulstrandfüller (6) auf einer Außenumfangsseite eines Wulstrandkerns (5) angeordnet ist, der in jedem der Wulstrandabschnitte (3) verborgen ist; und dessen Luftdruck, welcher seiner Maximallastkapazität entspricht, sich im Bereich von 350 bis 650 kPa befindet,
bei dem der Wulstrandfüller (6) eine Mehrzahl von Gummischichten (6a, 6b) enthält, die in einer radialen Richtung des Reifens gestapelt sind, wobei die Gummischicht (6a) auf der äußersten Umfangsseite einen Querschnittsbereich $S_1$, eine Härte $Hs_1$ und eine Verlusttangente $\tan\delta_1$ aufweist, die Gummischicht (6b) auf der innersten Umfangsseite einen Querschnittsbereich $S_2$, eine Härte $Hs_2$ und eine Verlusttangente $\tan\delta_2$ aufweist und die Höhe des Wulstrandfüllers (6) BFH ist und die Querschnittshöhe des Reifens SH ist und die folgenden Beziehungen formuliert sind

   (1)

   $$(S_1 \ \times \ \tan\delta_1)/[(S_1 \ \times \ \tan\delta_1) \ + \ (S_2 \ \times \ \tan\delta_2)]$$

   (2)

   $$(S_1 \ \times \ Hs_1)/[(S_1 \ \times \ Hs_1) \ + \ (S_2 \ \times \ Hs_2)]$$

   (3)

   $$BFH/SH$$

   (4)

   $$Hs_2 \ - \ Hs_1$$

   und
   (5) der Wert von $\tan\delta_1$ und die Differenz $\tan\delta_2$-$\tan\delta_1$;

   **dadurch gekennzeichnet, dass** Gummieigenschaften der Gummischichten (6a, 6b) so sind, dass der Wert der Beziehung (1) 0,25 bis 0,40 ist, der Wert der Beziehung (2) 0,35 bis 0,50 ist, der Wert der Beziehung (3) 0,25 bis 0,60 ist, der Wert der Beziehung (4) 10 bis 25 ist und bezüglich der Beziehung (5) $\tan\delta_1 \leq 0,1$ und $\tan\delta_2$-$\tan\delta_1 \leq 0,1$ gilt.

2. Pneumatischer Reifen nach Anspruch 1, bei dem:

   die Anzahl der Karkassenlagen (4A, 4B) entweder eine einlagige Struktur oder eine zweilagige Struktur ist;
   alle Karkassenlagen (4A, 4B) um den Wulstkern (5) von der Innenseite des Reifens nach außen umgeschlagen sind; und
   der höchste umgeschlagene Rand (4B) der Karkassenlagen weiter innen angeordnet ist als ein Scheitel des Wulstrandfüllers (6) in einer radialen Richtung des Reifens.

3. Pneumatischer Reifen nach Anspruch 2, bei dem ein Abstand H zwischen dem höchsten umgeschlagenen Rand (4B) der Karkassenlagen (4A, 4B) und dem Scheitel des Wulstrandfüllers (6) in der radialen Richtung des Reifens so festgelegt ist, um wenigstens 15 mm zu betragen.

**Revendications**

1. Bandage pneumatique, dans lequel au moins une couche de carcasse (4A, 4B) placée de manière à s'étendre entre

**9**

une paire de portions de talon (3) est réalisée par des cordes en fibre organique; qui possède une structure de carcasse, où un bourrage sur tringle (6) est agencé sur un côté périphérique extérieur d'une tringle (5) noyée dans chacune des portions de talon (3); et dont la pression d'air correspondant à la capacité de charge maximale de celui-ci est dans une plage de 350 à 650 kPa,

où le bourrage sur tringle (6) comporte une pluralité de couches en caoutchouc (6a, 6b) empilées dans une direction radiale du bandage, la couche en caoutchouc (6a) sur le côté périphérique le plus extérieur possède une zone en section transversale $S_1$, une dureté $Hs_1$, et une tangente de perte $\tan\delta_1$, la couche en caoutchouc (6b) sur le côté périphérique le plus intérieur a une zone en section transversale $S_2$, une dureté $Hs_2$ et une tangente de perte $\tan\delta_2$, et la hauteur du bourrage sur tringle (6) est BFH, et la hauteur en section transversale du bandage est SH, et les relations suivantes sont exprimées

(1)

$$(S_1 \times \tan\delta_1) / [(S_1 \times \tan\delta_1) + (S_2 \times \tan\delta_2)]$$

(2)

$$(S_1 \times Hs_1) / [(S_1 \times Hs_1) + (S_2 \times Hs_2)]$$

(3)

$$BFH/SH$$

(4)

$$Hs_2 - Hs_1$$

et
(5) la valeur de $\tan\delta_1$ et la différence $\tan\delta_2 - \tan\delta_1$;

**caractérisé en ce que** les caractéristiques du caoutchouc des couches en caoutchouc (6a, 6b) sont telles que la valeur de la relation (1) est de 0,25 à 0,40, la valeur de la relation (2) est de 0,35 à 0,50, la valeur de la relation (3) est de 0,25 à 0,60, la valeur de la relation (4) est de 10 à 25 et pour la relation (5), $\tan\delta_1 \leq 0,1$ et $\tan\delta_2 - \tan\delta_1 \leq 0,1$.

2. Bandage pneumatique selon la revendication 1, dans lequel:

le nombre de couches de carcasse (4A, 4B) est l'un quelconque d'une structure à une couche et d'une structure à deux couches;
toutes les couches de carcasse (4A, 4B) sont tournées vers le haut autour de la tringle (5) depuis l'intérieur du bandage vers l'extérieur; et
le bord le plus haut tourné vers le haut (4B) des couches de carcasse est agencé plus vers l'intérieur qu'un sommet du bourrage sur tringle (6) dans une direction radiale du bandage.

3. Bandage pneumatique selon la revendication 2, dans lequel une distance (H) entre le bord le plus élevé tourné vers le haut (4B) des couches de carcasse (4A, 4B) et le sommet du bourrage sur tringle (6) dans la direction radiale du bandage est réglée pour être au moins de 15 mm.

# Fig.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI624206 B
- JP 2002178724 A
- JP 10264620 A